# EUROPÄISCHE PATENTSCHRIFT

(11) **EP 2 641 519 B1**
(45) Veröffentlichungstag und Bekanntmachung des Hinweises auf die Patenterteilung: **05.08.2015**
(21) Anmeldenummer: 13159193.5
(22) Anmeldetag: 14.03.2013
(51) Int. Cl.: A47J 39/02

(54) **Vorrichtung zum Temperieren von in größenmäßig genormten, schalenförmigen rechteckigen Behältern aufgenommenen Speisen**
Device for the heating of meals held in shell-shaped rectangular containers of a standardised size
Dispositif destiné à tempérer des repas disposés dans des récipients rectangulaires en forme de coque normalisés par taille

(30) Priorität: 20.03.2012 DE 102012005437
(43) Veröffentlichungstag der Anmeldung: 25.09.2013
(73) Patentinhaber: BHS tabletop Aktiengesellschaft, 95100 Selb (DE)
(72) Erfinder: Ottenwälder, Max, 73525 Schwäbisch Gmünd (DE); Johannes, Brigitte, 92637 Weiden (DE); Steiling, Ralf, 92637 Weiden (DE); Küfner, Manuela, 92637 Weiden (DE)
(74) Vertreter: Blaumeier, Jörg

(56) Entgegenhaltungen:
- DE-U1- 29 910 565
- US-A- 4 779 605
- US-A- 4 794 228
- US-A- 4 852 749

## Beschreibung

Die Erfindung betrifft eine Vorrichtung zum Temperieren von in größenmäßig genormten, schalenförmigen rechteckigen Behältern aufgenommenen Speisen.

Zum Stand der Technik gehören die Folgenden Dokumente, DE 299 10 565, US 4 852 749, US 4 779 605, US 4 794 228.

Im Gastronomiebereich ist es oft erforderlich, Speisen über längere Zeit zu temperieren, insbesondere im Bereich eines Buffets, wo sich die Gäste über längere Zeit bedienen können. Die Speisen sind, je nach Art, entweder warm zu halten oder zu kühlen. Zur Präsentation der Speisen werden, wie hinlänglich bekannt, größenmäßig genormte, schalenförmige und in ihrer Grundform rechteckige Behälter verwendet, sogenannte Gastronorm-Behälter (oft auch GN-Behälter genannt). Diese genormten Behälter mit ihren genormten Größen lassen einen einfachen Behälteraustausch zu. Das Grundmaß "Gastro-Norm 1/1" beträgt dabei 325 x 530 mm, kleinere und größere Maße werden in Brüchen relativ zum Grundmaß angegeben. Die Tiefe der Gastronorm-Behälter variieren zwischen 20 - 200 mm, jedoch sind auch die entsprechenden Tiefen definiert vorgegeben, also ebenfalls normiert. Übliche Tiefen sind 20 mm, 65 mm und 100 mm. Die Behälter werden zur Präsentation der Speisen üblicherweise in eine Theke eingesetzt, unterhalb welcher je nachdem, ob zu kühlen oder zu wärmen ist, ein Kühlelement oder ein Heizelement angeordnet ist.

Werden die Behälter auf eine Theke gestellt, so ergibt sich bei Verwendung unterschiedlich tiefer Behälter ein uneinheitliches Erscheinungsbild, selbst wenn die Längen- und Breitenmaße aller Behälter gleich sind. Werden die Behälter in ein Aufnahmegestell eingehängt, in dem sie mit ihrem Rand aufliegen, so ergibt je nachdem, wie tief der eingehängte Behälter ist, ein unterschiedlicher Abstand zum unterhalb befindlichen Kühl- oder Heizelement, das in seiner Höhe stets gleich bleibt. Wird also ein sehr flaches Behältnis verwendet, so ist ein großer Abstand zum Kühl- oder Heizelement gegeben, das heißt, dass der Wärme- oder Kälteübertrag relativ gering ist. Ein sehr tiefes Behältnis wiederum liegt sehr nahe am Kühl- oder Heizelement, was einen deutlich größeren Kälte- oder Wärmeübertrag zur Folge hat, verbunden aber auch mit dem Umstand, dass es möglicherweise zu einer zu starken Kühlung oder Erwärmung kommt.

Der Erfindung liegt damit das Problem zugrunde, eine Vorrichtung anzugeben, die eine verbesserte Temperierung der in Gastronorm-Behältern aufgenommenen Speisen ermöglicht.

Zur Lösung dieses Problems ist bei einer Vorrichtung der eingangs genannten Art erfindungsgemäß vorgesehen, dass
- ein Korpus umfassend wenigstens zwei einander gegenüberliegende Seitenwände sowie eine diese oberseitig verbindende Abdeckung vorgesehen ist,
- dass in der Abdeckung eine rechteckige Öffnung vorgesehen ist, deren Größe in Abhängigkeit der genormten Größe von in die Öffnung einzuhängenden Behältern, die die Öffnung mit einander gegenüberliegenden, seitlich abstehenden Behälterrändern randseitig übergreifen, bemessen ist,
- dass in den Seitenwänden jeweils wenigstens zwei einander in zwei vertikal voneinander beabstandeten Einschubebenen gegenüberliegende nutförmige Aufnahmen vorgesehen sind,
- und dass wenigstens eine der Temperierung dienende Wanne vorgesehen ist, die wenigstens zwei einander gegenüberliegende, seitlich abstehende Wannenränder aufweist, und die derart bemessen ist, dass sie einerseits in die Öffnung unter Übergriff des Öffnungsrands durch die Wannenränder einhängbar ist, und andererseits mit ihren Wannenrändern in die jeweiligen einander gegenüberliegenden Aufnahmen in den Seitenwänden einschiebbar ist.

Die erfindungsgemäße Vorrichtung zeichnet sich zum einen durch einen Korpus aus, der wenigstens zwei Seitenwände besitzt, vorzugsweise auch eine weitere, an einer weiteren Seite schließende Rückwand, sowie eine oberseitige Abdeckung, die eine rechteckige, größerflächige Öffnung aufweist, in die die GN-Behälter einzuhängen sind. Die Öffnung weist ein Maß auf, das auf das vom Grundmaß her genormte und einheitliche Längen- und Breitenmaß der diesbezüglich verwendbaren GN-Behälter abgestimmt ist. Das heißt, dass es möglich ist, in die Öffnung ein GN-Behältnis einzusetzen, das von der Grundfläche her also der Öffnungsfläche respektive dem Öffnungsmaß entspricht, wie auch zwei in der Breite halb so große GN-Behältnisse eingesetzt werden können, oder drei nur ein Drittel so breite Behältnisse. Das Längenmaß der Behältnisse ist jedoch stets gleich. Denkbar ist aber auch, die Behältergrößen im Längenmaß zu variieren, so dass z.B. zwei 2/4-Behälter in die Öffnung gesetzt werden können.

Darüber hinaus zeichnet sich die erfindungsgemäße Vorrichtung durch wenigstens eine Wanne aus, die als Träger für ein Kühl- oder Heizmittel dienen kann. Diese Wanne weist zwei einander gegenüberliegende, seitlich abstehende Wannenränder auf, mit denen sie in entsprechende Nuten, die seitenwandseitig vorgesehen sind und mindestens zwei höhenmäßig versetzte Einschubebenen definieren, eingeschoben werden können. Das heißt, dass die Wanne innerhalb des Korpus in wenigstens zwei Ebenen positioniert werden kann. Darüber hinaus kann die Wanne auch in die Öffnung, dabei den Öffnungsrand übergreifend, eingehängt werden, wonach erst der GN-Behälter eingehängt wird. Mithin ist also eine dritte Positionierungsebene gegeben.

Die Wanne dient wie beschrieben beispielsweise der Aufnahme eines Kühlelements, das als großflächiges Element, die Wanne weitgehend ausfüllend, eingelegt wird. Je nachdem, wie tief nun der oder die in die Öffnung einzuhängenden Behältnisse sind, wird die Wanne in der entsprechenden Ebene positioniert. Werden beispielsweise flache GN-Behälter mit einer Tiefe von 20 mm verwendet, so wird die Wanne von oben in die Öffnung eingehängt, wonach erst die GN-Behälter eingehängt werden. Das Kühlelement ist dann optimal zum Behälterboden beabstandet.

Wird oder werden GN-Behälter mit größerer Tiefe, beispielsweise mit 65 mm, verwendet, so wird die Wanne in die obere Einschubebene geschoben, während die GN-Behälter direkt in die Öffnung eingehängt werden. Auch hier befindet sich das Kühlelement wieder optimal beabstandet zum Behälterboden. Kommen noch tiefere GN-Behälter, beispielsweise mit einer Tiefe von 100 mm, zum Einsatz, so wird die Wanne in die darunterliegende Einschubebene geschoben und die Behälter von oben eingehängt. Wiederum ist das Kühlelement optimal zum Behälterboden beabstandet.

Ersichtlich kann auf diese Weise eine optimale Temperierung erfolgen, wobei selbstverständlich anstatt eines Kühlelements grundsätzlich auch ein Heizelement oder ein Heizmittel in diese Wanne eingesetzt werden kann, oder, worauf nachfolgend noch eingegangen wird, darunter befestigt werden kann. In jedem Fall lässt sich hierüber einer guten Temperierung zweckdienliche, der Tiefe der GN-Behälter angepasste Beabstandung des Kühl- oder Heizelements erreichen.

Letztlich können auch mehr als zwei über die nutförmigen Aufnahmen definierte Einschubebenen im Korpus vorgesehen sein, beispielsweise drei oder mehr Einschubebenen, so dass die beschriebene Wanne in noch weiteren Höhenpositionen eingesetzt werden kann, um gegebenenfalls noch andere GN-Behältertiefen erfassen zu können oder um auch einen anderen Wannentyp, auf den nachfolgend noch eingegangen wird, einsetzen zu können.

Die Tiefe der Wanne und die Lage der Einschubebenen ist in Weiterbildung der Erfindung in Abhängigkeit der genormten Tiefe der Behälter derart gewählt, dass der Boden der Wanne sowohl in der in die Öffnung eingehängten Stellung als auch in jeder Einschubebene den nahezu gleichen Abstand zum Boden des dieser Einschubebene hinsichtlich der Behältertiefe zugeordneten Behälters aufweist. Das heißt, dass quasi eine geometrische Zuordnung zwischen Wannentiefe respektive Einschubebenenlage und den von der Tiefe her verwendbaren GN-Behältnisse auf die die Vorrichtung also ausgelegt ist, gegeben ist.

In Weiterbildung der Erfindung kann die Vorrichtung ferner wenigstens eine weitere Wanne zur Aufnahme von der Speisenwärmung dienendem Wasser umfassen, die wenigstens zwei einander gegenüberliegende, seitlich abstehende Wannenränder aufweist, und die derart bemessen ist, dass sie in die Öffnung unter Übergriff des Öffnungsrandes einhängbar ist. Diese spezielle Wanne dient lediglich der Speisenwärmung, wozu sie Wasser aufnimmt, das von unten noch beheizt wird. Eine solche Wanne ist auch als "Chafing Dish" bekannt. Die Wanne selbst wird primär von oben in die Öffnung eingesetzt, sie weist jedoch eine, verglichen mit den zuvor beschriebenen Wannen, größere Tiefe auf, so dass sie sich relativ weit in das Korpusinnere erstreckt. In sie ist nun ein definiert tiefer GN-Behälter, beispielsweise mit einer Tiefe von 65 mm, einhängbar, der wiederum definiert zum Wannenboden beabstandet ist.

An dieser Stelle der Hinweis, dass es jedoch einer solchen speziellen Wanne zur Speisenwärmung nicht bedarf. Denn auch die zuvor beschriebenen Wannen sind grundsätzlich in der Lage, ein Heizmittel aufzunehmen, das heißt, dass auch sie mit Wasser befüllt und gegebenenfalls von unten beheizt werden können, wie sie auch ein Kühlelement aufnehmen können.

Kommt jedoch eine solche spezielle weitere Wanne, also ein "Chafing-Dish" zum Einsatz, so ist sie prinzipiell von oben in die Öffnung einsetzbar. Denkbar ist es aber auch, die Wanne mit ihren Wannenrändern so auszubilden, dass sie zusätzlich auch in wenigstens eine Einschubebene einsetzbar ist. Das heißt, dass die Wanne nicht nur in eine erste, oberste Ebene eingesetzt werden kann, sondern auch in eine darunterliegende, über die Aufnahmen definierte Einschubebene. Dies ermöglicht es beispielsweise GN-Behälter mit einer Tiefe von 100 mm in Verbindung mit dieser speziellen Wanne zu verwenden. Gleichwohl können diese GN-Behälter mit einer Tiefe von 100 mm aber auch mit einer ersten Wanne, die dann beispielsweise in der untersten, zweiten Einschubebene angeordnet ist, verwendet werden. Der Abstand zum Wannenboden ist hier im Wesentlichen der gleiche wie zum Boden der weiteren Wanne.

Wie beschrieben dient diese weitere Wanne primär der Erwärmung. Um das aufzunehmende Wasser kontinuierlich zu temperieren ist zweckmäßigerweise eine, gegebenenfalls wannenförmig ausgestaltete, Tragplatte mit wenigstens zwei einander gegenüberliegenden Seitenrändern, die in die Aufnahmen einer Einschubebene einschiebbar sind, vorgesehen, die der Aufnahme eines oder mehrerer Heizelemente, insbesondere eines oder mehrerer Brenner, wie z.B. Gel-Brenner dient. Diese Tragplatte bildet also die Positionierungsebene für ein Heizelement, das von unterhalb die weitere Wanne beheizt. Selbstverständlich kann diese Tragplatte auch in Verbindung mit einer ersten Wanne verwendet werden, wenn in diese Wasser zum Speisenwärmen gegeben wird. Die Tragplatte kann dann entsprechend unterhalb dieser Wanne angeordnet werden, so dass ein darauf befindliches Heizelement das Wasser in der darüber befindlichen Wanne heizen kann.

Eine besonders zweckmäßige Weiterbildung der Erfindung sieht ferner vor, dass an der Unterseite des Wannenbodens, gleich welcher Art nun die Wanne ist, eine Aufnahme für wenigstens ein Heizelement, insbesondere eine elektrisch beheizbare Heizplatte oder ein Brennerfach vorgesehen ist. Gemäß dieser Erfindungsausgestaltung ist es also möglich, ein Heizelement unmittelbar unterhalb des Wannenbodens an der Wanne selbst bei Bedarf anzuordnen. Eine solche entsprechende Heizelementaufnahme kann sowohl an der ersten Wanne, die primär zur Aufnahme eines Kühlelements dient, aber auch als Warmwasserheizung dienen kann, vorgesehen sein, wie auch an der weiteren Wanne, die primär als Wärmewanne dient. Die Aufnahme kann beispielsweise in Form zwei einander gegenüberliegender Winkelabschnitte ausgelegt sein, in die ein Heizelement, beispielsweise eine widerstandsbeheizte Heizplatte, eingeschoben wird.

Die Wannen bzw. die Tragplatte sind bevorzug aus Metall, insbesondere aus Edelstahl oder Kunststoff gefertigt, so dass sie einerseits hinreichend stabil sind, andererseits auch leicht zu reinigen sind.

Der Korpus wiederum kann aus unterschiedlichen Materialien sein, denkbar ist beispielsweise die Verwendung von Holz, insbesondere beschichtetem Holz (z. B. mit einer einer Brandschutzverordnung entsprechenden Melamin-Beschichtung), aber auch eine Ausführung aus Kunststoff oder Metall, insbesondere Edelstahl ist denkbar.

Neben der Vorrichtung betrifft die Erfindung ferner eine Einrichtung zum Präsentieren und gleichzeitigem Temperieren von Speisen, umfassend eine Vorrichtung der vorbeschriebenen Art bestehend aus Korpus und Wanne(n) respektive Tragplatte, sowie wenigstens einen genormten rechteckigen Behälter, der der Aufnahme der Speise dient. Das heißt, dass die Einrichtung zusätzlich noch den respektive in der Regel die mehreren GN-Behälter umfasst, so dass sich insgesamt ein komplettes Präsentations- und Temperierungssystem ergibt, bestehend aus Korpus, Wannen/Tragplatte und GN-Behältern.

Wie beschrieben sind zweckmäßigerweise mehrere Behälter unterschiedlicher, jedoch genormter Größe vorgesehen, die unterschiedlich breit sind, jedoch alle eine definierte Länge besitzen, wobei die Länge dem Maß der Aufnahmenöffnung entspricht, wenn die Breite entweder dem Öffnungsmaß entspricht oder einem genormten Bruchteil davon. Zweckmäßigerweise sind Behälter in drei unterschiedlichen Größen vorgesehen, wobei ein Behälter der ersten Größe derart bemessen ist, dass er allein die Öffnung ausfüllt, dass ein Behälter der zweiten Größe derart bemessen ist, dass zwei solche Behälter in die Öffnung, die sie ausfüllen, einhängbar sind, und dass ein Behälter der dritten Größe derart bemessen ist, dass drei solcher Behälter in die Öffnung, die sie ausfüllen, einhängbar sind. Wird die Aufteilung quasi in der anderen, senkrecht dazu stehenden Ebene vorgenommen, bleibt also das andere Maß konstant, so können z.B. neben einem die ganze Öffnung ausfüllenden Behälter zwei weitere Behälter der Größe 2/4, die zusammen in die Öffnung, diese ausfüllend, eingesetzt werden können, vorgesehen sein. Hier sind dann z.B. nur zwei verschiedene Größen mit jeweils unterschiedlichen Tiefen vorgesehen. Die Behälter selbst können drei unterschiedliche Normtiefen, beispielsweise 20 mm, 65 mm und 100 mm aufweisen, entsprechend ist natürlich die Auslegung der Wannen respektive die Positionierung der Einschubebenen. Die Behälter selbst sind bevorzugt aus Porzellan, können aber auch aus Metall oder Kunststoff sein.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht eines Korpus einer erfindungsgemäßen Einrichtung mit Blick von schräg unten,
- Fig. 2: eine Schnittansicht durch den Korpus aus Fig. 1 in Längsrichtung,
- Fig. 3: eine Schnittansicht durch den Korpus aus Fig. 1 in Querrichtung,
- Fig. 4: eine Aufsicht auf den Korpus aus Fig. 1,
- Fig. 5: ein erstes Anordnungsbeispiel einer erfindungsgemäßen Vorrichtung mit einer ersten Wanne,
- Fig. 6: ein zweites Anordnungsbeispiel,
- Fig. 7: ein drittes Anordnungsbeispiel,
- Fig. 8: ein viertes Anordnungsbeispiel mit einer weiteren Wanne und einer Tragplatte,
- Fig. 9: ein fünftes Anordnungsbeispiel einer weiteren Wanne,
- Fig. 10: ein sechstes Anordnungsbeispiel einer weiteren Wanne, und
- Fig. 11-Fig. 17: verschiedene Seitenansichten und Aufsichten der erfindungsgemäßen Einrichtung mit integrierten GN-Behältern.

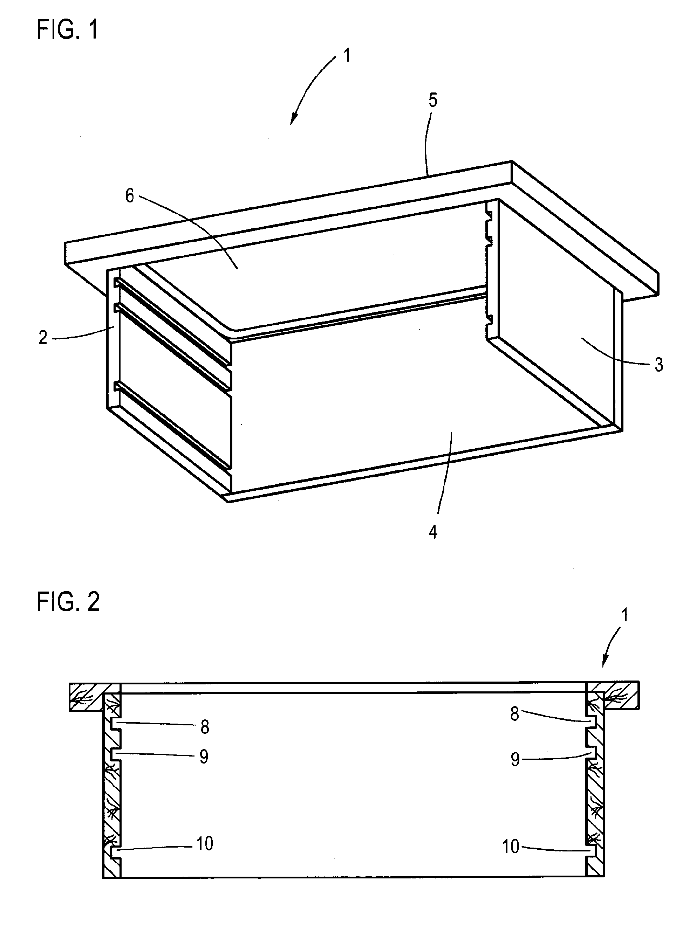

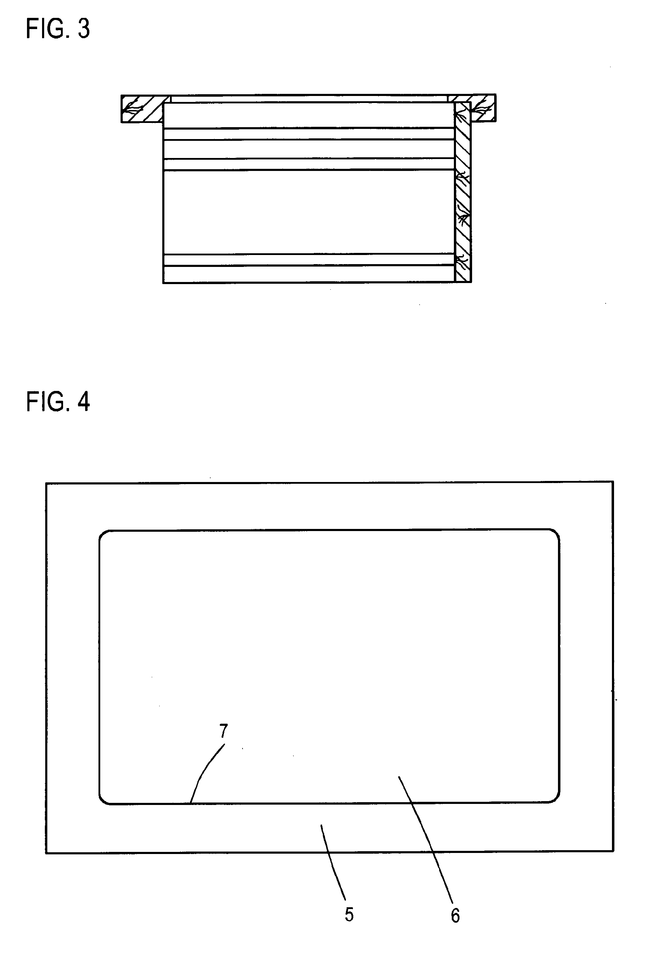

Fig. 1 zeigt den Korpus 1 einer erfindungsgemäßen Einrichtung, umfassend zwei Seitenwände 2, 3 sowie eine diese verbindende Frontwand 4. Rückseitig ist der Korpus 3 offen, um ein Einschieben von Wannen zu ermöglichen, worauf nachfolgend noch eingegangen wird. Oberseitig ist eine Abdeckung 5 vorgesehen, die eine zentrale Öffnung aufweist, die - siehe Fig. 4 - rechteckig ist. Der umlaufende Öffnungsrand 7 dient der Auflage von Randabschnitten einzuhängender GN-Behälter, worauf nachfolgend noch eingegangen wird.

In den beiden Seitenwänden 2, 3 sind, paarweise einander gegenüberliegend, jeweils Nuten 8, 9, 10 eingebracht, siehe insbesondere die Schnittansicht gemäß Fig. 2. Die Nutenpaare 8, 9, 10 definieren jeweils Einschubebenen für Wannen, die auf diese Weise unterschiedlich hoch positioniert werden können.

Der Korpus 1 selbst ist bevorzugt aus Holz, und vorzugsweise mit einer Kunststoffbeschichtung wie beispielsweise einer Melamin-Beschichtung versehen. Denkbar sind aber auch andere Materialien. Der Korpus 1, der auch als Anrichte bezeichnet werden kann, dient also als Rahmen respektive Halterung für diverse GN-Behälter, die in ihrem Flächenmaß genormt sind, wie sie auch genormte Tiefen besitzen, beispielsweise von 20 mm, 65 mm oder 100 mm. Das heißt, dass die eingesetzten GN-Behälter unterschiedlich weit in das Korpusinnere greifen. Um nun ein Kühlelement oder ein Heizelement optimal bezüglich des Behälterbodens positionieren zu können, lässt der erfindungsgemäße Korpus es zu, eine entsprechende Wanne aufgrund der Anordnung der Nutenpaare 8, 9, 10 entsprechend zu positionieren.

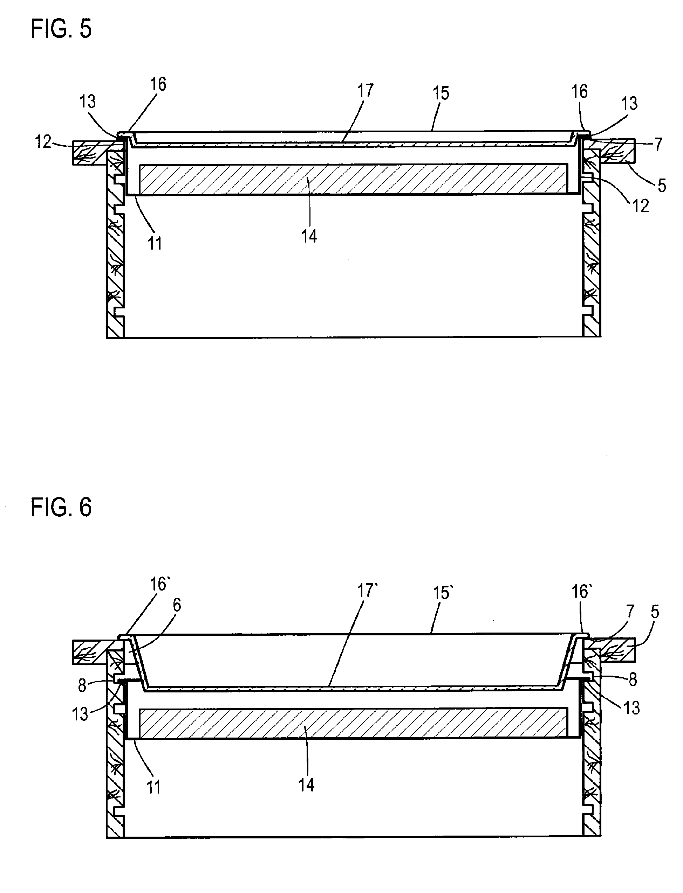

In den Fig. 5 - 10 sind unterschiedliche Anwendungsbeispiele gegeben. Gezeigt ist jeweils eine geschnittene Rückansicht.

Fig. 5 zeigt hierzu ein erstes Ausführungsbeispiel. In die Öffnung der Abdeckung 5 ist im gezeigten Beispiel eine Wanne 11 eingehängt, die an zwei einander gegenüberliegenden Seitenwänden 12 jeweils einen nach außen abgewinkelten Wannenrand 13 aufweist. Mit diesen beiden Wannenrändern liegt die Wanne 11 auf dem Öffnungsrand 7 auf. Die Wanne 11 ist bevorzugt an den beiden Längsseiten ebenfalls geschlossen, bildet also einen geschlossenen Wanneninnenraum. Aus Übersichtlichkeitsgründen sind jedoch diese beiden Seitenwände nicht näher gezeigt.

Im Inneren der Wanne ist im gezeigten Beispiel ein Kühlelement 14, beispielsweise eine Kühlplatte, die zuvor in einem Kühl- oder Eisschrank auf eine gewünschte Temperatur heruntergekühlt wurde, aufgenommen.

Ersichtlich ist weiterhin ein erster GN-Behälter 15 in die Öffnung der Abdeckung 5 eingesetzt, er ruht mit seinen Behälterrändern 16, von denen ebenfalls nur die beiden Seitenränder gezeigt sind, auf den Wannenrändern 13. Es ist ein nur relativ geringer Abstand zwischen dem Behälterboden 17 und dem Kühlelement 14 gegeben. Der Abstand ist so konzipiert, dass ein gewisses Luftpolster zur Kühlungsoptimierung gegeben ist. Der GN-Behälter 15 weist im gezeigten Beispiel exemplarisch eine Tiefe von 20 mm auf.

Fig. 6 zeigt ein Anwendungsbeispiel, bei dem die gleiche Wanne 11 verwendet wird, die hier jedoch in der Einschubebene, die über die beiden nutförmigen Aufnahmen 8 gebildet ist, angeordnet ist. Hierzu werden die beiden Wannenränder 13 der Wanne 11 in die beiden Aufnahmen 8 eingeschoben, was ohne weiteres möglich ist, nachdem, siehe Fig. 1, der Korpus 1 rückseitig offen ist. Ein zweiter GN-Behälter 15', der eine größere Tiefe als der erste, in Fig. 1 gezeigte GN-Behälter 15 aufweist, nämlich beispielsweise 65 mm, wird mit seinen beiden Seitenrändern 16' in die Öffnung 6 eingehängt, er liegt mit den beiden Seitenrändern 16' auf dem Öffnungsrand 7 auf.

Ersichtlich bildet sich auch hier ein geringer, jedoch definierter Abstand zwischen dem Behälterboden 17' und dem auch hier in die Wanne 11 eingebrachten Kühlelement 14 aus. Der Abstand entspricht im Wesentlichen dem Abstand gemäß Anwendungsbeispiel nach Fig. 5.

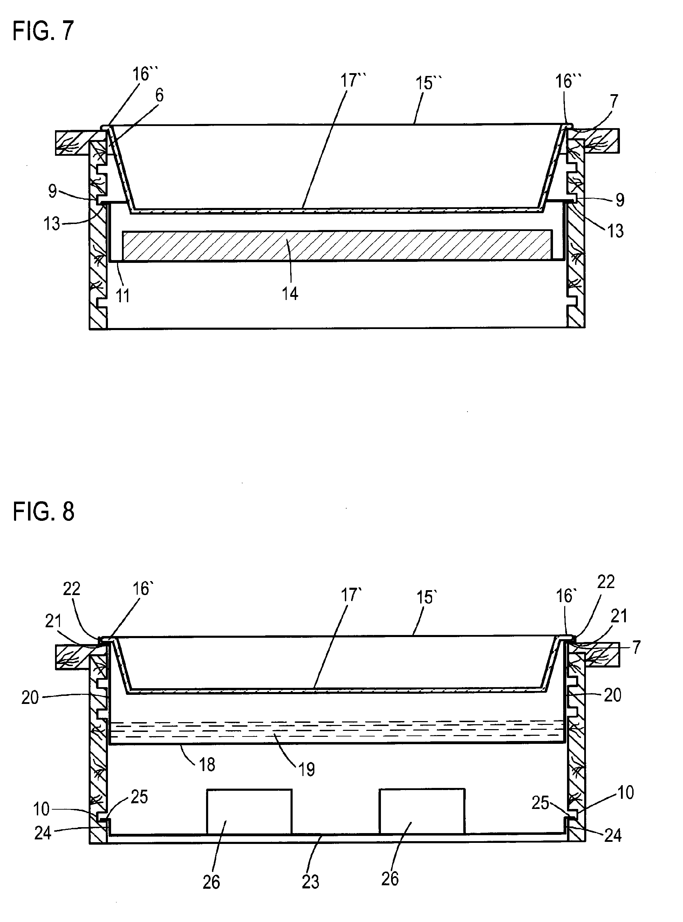

Ein drittes Anwendungsbeispiel unter Verwendung der gleichen Wanne 11 zeigt Fig. 7. Hier ist die Wanne 11 mit ihren Wannenrändern 13 in der Einschubebene, die über die beiden nutförmigen Aufnahmen 9 definiert wird, aufgenommen, die Wannenränder 13 sind in die Aufnahmen 9 eingeschoben. Der hier verwendete GN-Behälter 15" ist wiederum eine Normtiefe größer, er weist beispielsweise eine Tiefe von 100 mm auf und liegt ebenfalls mit seinen beiden Seitenrändern 16" auf dem Öffnungsrand 7 auf. Er erstreckt sich tief durch die Öffnung 6 in das Korpusinnere, sein Boden 17" liegt auch hier in einem definierten Abstand zum wannenseitig aufgenommenen Kühlelement 14, wobei auch hier der Abstand nahezu gleich dem Abstand in dem zuvor beschriebenen Anwendungsbeispiel ist. Wiederum bildet sich auch hier ein Luftpolster zwischen dem Behälterboden 17" und dem Kühlelement 14.

Fig. 8 zeigt ein Anwendungsbeispiel, bei dem eine weitere Wanne 18 verwendet wird. Diese weitere Wanne, die auch als "Chafing-Dish" benannt werden kann, dient der Aufnahme von Wasser 19, bildet also ein Wasserbad, das der Erwärmung von Speisen, die im hier verwendeten GN-Behälter 15' aufzunehmen sind.

Diese Wanne 18 weist ebenfalls zwei Seitenwände 20 auf, wie sie natürlich auch eine Vorder- und eine Rückwand aufweist, mithin also geschlossen ist, was in Fig. 8 jedoch zeichnerisch nicht gezeigt ist. Die beiden Seitenwände 20 sind im Randbereich mit einem sich nach außen erstreckenden Wannenrand 21, der abgewinkelt ist, versehen, der eine zweite Abwinklung 22 zeigt. Mit diesem Seitenrand 21 liegt die Wanne 18 auf dem Öffnungsrand 7 auf. Der GN-Behälter 15' (entsprechend dem Behälter aus Fig. 6) ruht mit seinen Behälterrändern 16' auf dem Wannenrand 22.

Unterhalb der Wanne 18 befindet sich eine Tragplatte 23, die im gezeigten Beispiel lediglich zwei Plattenseitenwände 24 mit entsprechenden Plattenrändern 25 aufweist, die im gezeigten Beispiel in die die unterste Einschubebene definierenden nutförmigen Aufnahmen 10 eingreifen. Die Tragplatte 23 dient der Aufnahme zweier Heizelemente 26, beispielsweise zweier Gel-Brenner, über die die Wanne 18 bodenseitig geheizt werden kann, so dass das Wasser 19, also das Wasserbad, temperiert werden kann. Die Tragplatte 23, bei der es sich beispielsweise um eine GN-Platte 1/1-tel aus Metall handeln kann, beispielsweise mit einer handelsüblichen Tiefe von 20 mm, kann selbstverständlich auch in den beiden anderen Seitenwänden geschlossen sein, mithin also ebenfalls wannenartig ausgebildet sein.

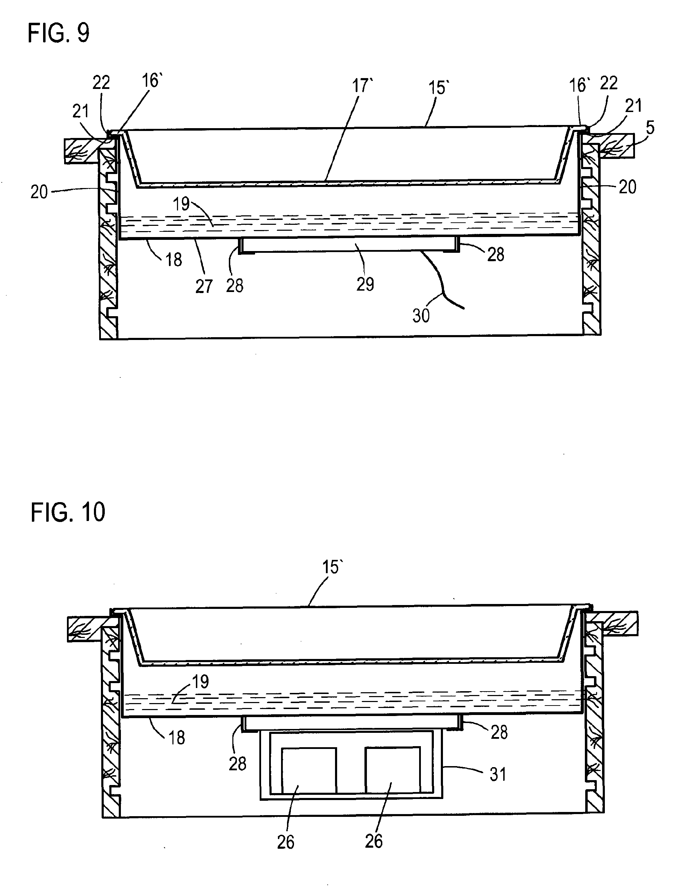

Fig. 9 zeigt eine Ausgestaltung ähnlich Fig. 8. Auch hier kommt eine Wanne 18 zum Einsatz, die der Aufnahme eines Wasserbades 19 dient und die mit ihren an den Seitenwänden 20 vorgesehenen Wannenrändern 21 auf der Abdeckung 5 aufliegt. In sie eingehängt ist wiederum ein GN-Behälter 15', der mit seinen Behälterrändern 16' auf den Wannenrändern 21 aufliegt.

Hier sind jedoch am Boden 27 der Wanne 18 zwei Halterungen 28 vorgesehen, die eine Aufnahme für eine elektrische Heizplatte 29 bilden. Über diese ist also eine unmittelbare Bodenbeheizung möglich. Das Kabel 30 kann durch die offene Rückseite des Korpus herausgeführt und angeschlossen werden.

In die Halterungen 28 kann jedoch, siehe Fig. 10, anstelle der elektrischen Heizplatte 29 auch ein Brennerfach 31, in das im gezeigten Beispiel zwei Gel-Brenner 26 eingestellt sind, eingesetzt werden, auch hierüber ist eine unmittelbare Bodenbeheizung möglich.

Beim gezeigten Ausführungsbeispiel der Wanne 18 gemäß der Fig. 8 - 10, bei dem am Wannenrand 21 ein weiterer, sich vertikal nach oben erstreckender Rand 22 vorgesehen ist, ist ein Einschieben des Wannenrands 21 in ein Aufnahmepaar 8 oder 9 nicht möglich. Sofern jedoch entweder der vertikal stehende Rand 22 nicht oder etwas verkürzt vorgesehen ist, ist es natürlich auch denkbar, diese Wanne 18 beispielsweise in die obere Einschubebene, gebildet durch die Aufnahmen 8, einzuschieben, mithin also die Wanne 18 etwas tiefer zu hängen. Dann ist es natürlich ohne weiteres möglich, auch beispielsweise den GN-Behälter 15" mit einer Tiefe von 100 mm zu verwenden.

Darüber hinaus ist es auch bei den Wannen 11 gemäß der Fig. 5 - 7 möglich, bodenunterseitig Halterungen 28 zur Bildung einer Aufnahme anzuordnen, um bei Bedarf beispielsweise eine elektrische Heizplatte 29 oder ein Brennerfach 31 auch an diesen Wannen anzubringen. Denn die Wannen 11 können selbstverständlich gleichermaßen zur Bildung eines Wasserbades verwendet werden, nachdem auch sie bevorzugt allseitig geschlossen sind. Dies bedarf dann jedoch einer Ausführung dieser Wannen aus Metall, vorzugsweise Edelstahl, was grundsätzlich für die Wannen 18 gilt. Sofern die Wannen 11 jedoch nicht der Erwärmung dienen, sondern lediglich der Aufnahme eines Kühlelements, können sie auch aus Kunststoff ausgeführt sein.

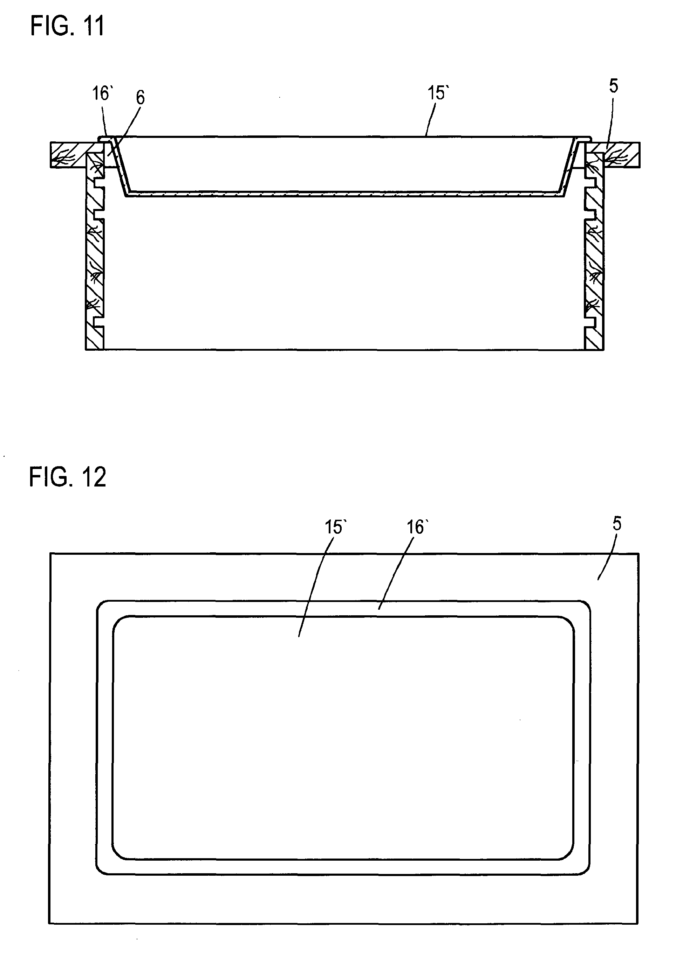

Die Fig. 11 - 16 zeigen schließlich in jeweils einer Seitenansicht von der offenen Korpusrückseite her sowie einer Draufsicht drei unterschiedliche Anordnungsbeispiele von GN-Behältern. In den gezeigten Beispielen sind jeweils GN-Behälter 15' mit einer genormten Tiefe von 65 mm dargestellt.

Bei dem Anwendungsbeispiel gemäß den Fig. 11 und 12 ist nur ein GN-Behälter 15' in die Öffnung 6 eingesetzt. Die Größe des GN-Behälters 15' entspricht, sowohl was seine Länge als auch seine Breite angeht, dem Längen- und Breitenmaß der Öffnung 6, erfüllt diese also gänzlich aus. Ersichtlich liegt der GN-Behälter 15' mit allen umlaufenden Seitenrändern 16' auf der Abdeckung 5 auf.

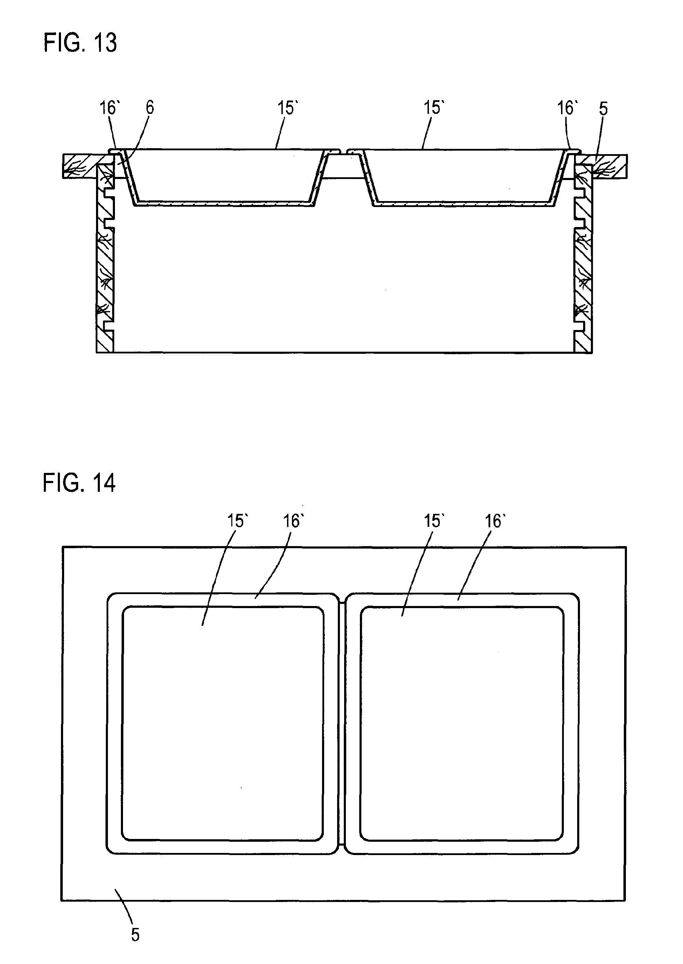

Im gezeigten Beispiel gemäß der Fig. 13 und 14 sind zwei GN-Behälter 15' in die Öffnung 6 eingesetzt. Die Länge beider Behälter 15' entspricht dem Maß des einen Behälters 15' aus den Fig. 11 und 12, die Breite jedes Behälters 15' entspricht hier jedoch nur der Hälfte der Breite des Behälters 15' aus den Fig. 11 und 12. Ersichtlich können, die Öffnung 6 ausfüllend, zwei solcher GN-Behälter 15' angeordnet werden, die mit jeweils drei Seitenrändern 16' auf der Abdeckung 5 aufliegen, die beiden mittigen Seitenränder tragen nicht.

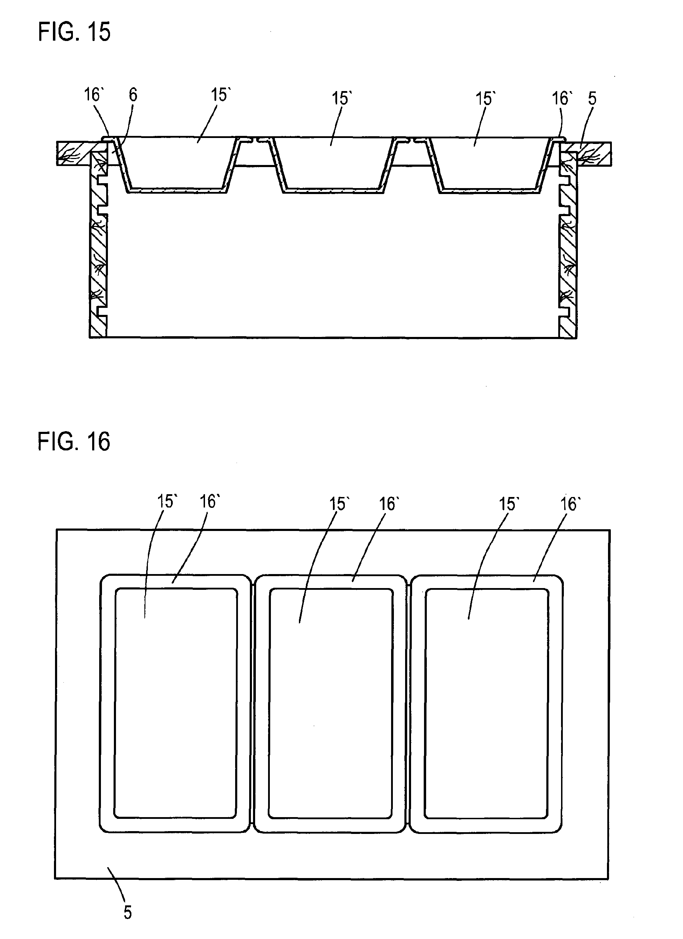

Die Fig. 15 und 16 zeigen ein Ausführungsbeispiel, bei dem drei GN-Behälter 15' verwendet sind, deren Länge der Länge der in den Fig. 11 - 14 gezeigten Behälter entspricht. Die Breite eines jeden Behälters 15' gemäß Fig. 15 und 16 entspricht jedoch nur einem Drittel der Breite des einen Behälters 15' aus den Fig. 11 und 12. Ersichtlich können folglich drei solcher Behälter in der Öffnung 6 positioniert werden, wobei die beiden äußeren Behälter 15' mit drei Seitenrändern 16' aufliegen, während der innere Behälter 15' nur mit zwei Seitenrändern aufliegt.

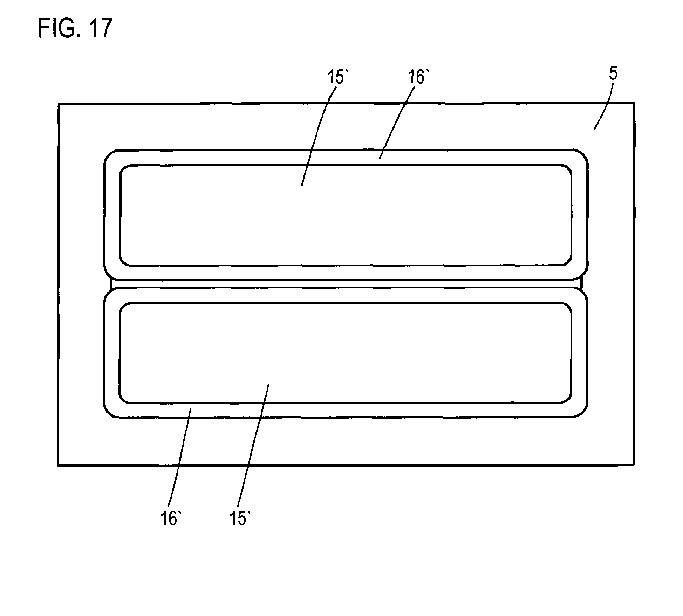

Fig. 17 zeigt schließlich ein Ausführungsbeispiel mit zwei 2/4-Behältern 15', die anstelle eines großen Behälters, wie er z.B. in den Fig. 11 und 12 gezeigt ist, gemeinsam in die Öffnung gesetzt sind und einander ergänzen. Hier verläuft also die "Trennebene" zwischen den Behältern in senkrechter Richtung verglichen zur "Trennebene" der zuvor beschriebenen Beispiele.

## Patentansprüche

1. Vorrichtung zum Temperieren von in größenmäßig genormten, schalenförmigen rechteckigen Behältern aufgenommenen Speisen, **dadurch gekennzeichnet, dass**
- ein Korpus (1) umfassend wenigstens zwei einander gegenüberliegende Seitenwände (2, 3) sowie eine diese oberseitig verbindende Abdeckung (5) vorgesehen ist,
- dass in der Abdeckung (5) eine rechteckige Öffnung (6) vorgesehen ist, deren Größe in Abhängigkeit der genormten Größe von in die Öffnung (6) einzuhängenden Behältern (15, 15', 15"), die die Öffnung (6) mit einander gegenüberliegenden, seitlich abstehenden Behälterrändern (16, 16', 16") randseitig übergreifen, bemessen ist,
- dass in den Seitenwänden (2, 3) jeweils wenigstens zwei einander in zwei vertikal voneinander beabstandeten Einschubebenen gegenüberliegende nutförmige Aufnahmen (8, 9, 10) vorgesehen sind,
- und dass wenigstens eine der Temperierung dienende Wanne (11) vorgesehen ist, die wenigstens zwei einander gegenüberliegende, seitlich abstehende Wannenränder (13) aufweist, und die derart bemessen ist, dass sie einerseits in die Öffnung (6) unter Übergriff des Öffnungsrands (7) durch die Wannenränder (13) einhängbar ist, und andererseits mit ihren Wannenrändern (13) in die jeweiligen einander gegenüberliegenden Aufnahmen (8, 9, 10) in den Seitenwänden (2, 3) einschiebbar ist.

2. Vorrichtung nach Anspruch 1, **dadurch gekennzeichnet, dass** jede Seitenwand (2, 3) drei Aufnahmen (8, 9, 10) aufweist, so dass drei Einschubebenen gebildet sind.

3. Vorrichtung nach Anspruch 1 oder 2, **dadurch gekennzeichnet, dass** die Tiefe der Wanne (11) und Lage der Einschubebenen in Abhängigkeit der genormten Tiefe der Behälter (15, 15', 15") derart gewählt ist, dass der Boden der Wanne (11) sowohl in der in die Öffnung (6) eingehängten Stellung als auch in jeder Einschubebene den gleichen Abstand zum Boden (17, 17', 17") des dieser Einschubebene hinsichtlich der Behältertiefe zugeordneten Behälters (15, 15', 15") aufweist.

4. Vorrichtung nach einem der vorangehenden Ansprüche, **dadurch gekennzeichnet, dass** wenigstens eine weitere Wanne (18) zur Aufnahme von der Speisenwärmung dienendem Wasser (19) vorgesehen ist, die wenigstens zwei einander gegenüberliegende, seitlich abstehende Wannenränder (21) aufweist, und die derart bemessen ist, dass sie in die Öffnung (6) unter Übergriff des Öffnungsrands (7) einhängbar ist.

5. Vorrichtung nach Anspruch 4, **dadurch gekennzeichnet, dass** die Wanne (18) mit ihren Wannenrändern (21) derart ausgebildet ist, dass sie in die Aufnahmen (8, 9, 10) wenigsten eine Einschubebene einsetzbar ist.

6. Vorrichtung nach einem der vorangehenden Ansprüche, **dadurch gekennzeichnet, dass** eine, gegebenenfalls wannenförmig ausgestaltete Tragplatte (23) mit wenigstens zwei einander gegenüberliegenden Seitenrändern (25), die in die Aufnahmen (8, 9, 10) einer Einschubebene einschiebbar sind, vorgesehen ist, die der Aufnahme wenigstens eines Heizelements (26), insbesondere eines Brenners dient.

7. Vorrichtung nach einem der vorangehenden Ansprüche, **dadurch gekennzeichnet, dass** an der Unterseite des Wannenbodens einer Wanne (11, 18) wenigstens eine Aufnahme (28) für wenigstens ein Heizelement (29, 31), insbesondere eine elektrisch beheizbare Heizplatte (29) oder ein Brennerfach (31), vorgesehen ist.

8. Vorrichtung nach einem der vorangehenden Ansprüche, **dadurch gekennzeichnet, dass** die Wannen (11, 18) oder die Tragplatte (23) aus Metall, insbesondere Edelstahl, oder Kunststoff sind.

9. Vorrichtung nach einem der vorangehenden Ansprüche, **dadurch gekennzeichnet, dass** der Korpus (1) aus Holz, insbesondere beschichtetem Holz, Kunststoff oder Metall, insbesondere Edelstahl besteht.

10. Einrichtung zum Präsentieren und gleichzeitigem Temperieren von Speisen, umfassend eine Vorrichtung nach einem der vorangehenden Ansprüche, sowie wenigstens einen genormten rechteckigen Behälter (15, 15', 15"), der der Aufnahme der Speise dient.

11. Einrichtung nach Anspruch 10, **dadurch gekennzeichnet, dass** mehrere Behälter (15, 15', 15") unterschiedlicher, jedoch genormter Größen vorgesehen sind, die unterschiedlich lang sind.

12. Einrichtung nach Anspruch 11, **dadurch gekennzeichnet, dass** Behälter (15, 15', 15") in drei unterschiedlichen Größen vorgesehen sind.

13. Einrichtung nach Anspruch 12, **dadurch gekennzeichnet, dass** ein Behälter der ersten Größe derart bemessen ist, dass er allein die Öffnung ausfüllt, dass ein Behälter der zweiten Größe derart bemessen ist, dass zwei solche Behälter in die Öffnung, diese ausfüllend, einhängbar sind, und dass ein Behälter der dritten Größe derart bemessen ist, dass drei solcher Behälter in die Öffnung, diese ausfüllend, einhängbar sind.

14. Einrichtung nach Anspruch 11, **dadurch gekennzeichnet, dass** Behälter in zwei unterschiedlichen Größen vorgesehen sind, wobei ein Behälter der ersten Größe derart bemessen ist, dass er allein die Öffnung ausfüllt, und dass ein Behälter der zweiten Größe ein 2/4-Behälter ist.

15. Einrichtung nach einem der Ansprüche 10 bis 14, **dadurch gekennzeichnet, dass** die Behälter (15, 15', **15")** aus Porzellan, Metall oder Kunststoff sind.

## Claims

1. Apparatus for the temperature control of foods accommodated in standard-size, tray-like rectangular containers, **characterized in that**
- a basic structure (1) comprising at least two mutually opposite side walls (2, 3) and a covering (5), which connects these side walls on the upper side, is provided,
- **in that** the covering (5) contains a rectangular opening (6) of which the size is dimensioned in dependence on the standard size of containers (15, 15', 15"), which can be suspended in the opening (6) and engage over the periphery of the opening (6) by way of mutually opposite, laterally projecting container peripheries (16, 16', 16"),
- **in that** the side walls (2, 3) each contain at least two groove-like mounts (8, 9, 10), which are located opposite one another in two vertically spaced-apart push-in planes,
- and **in that** at least one pan (11) is provided, said pan serving for temperature-control purposes, having at least two mutually opposite, laterally projecting pan peripheries (13) and being dimensioned such that, on the one hand, it can be suspended in the opening (6), the pan peripheries (13) engaging over the opening periphery (7) in the process, and, on the other hand, it can have its pan peripheries (13) pushed into the respective mutually opposite mounts (8, 9, 10) in the side walls (2, 3).

2. Apparatus according to Claim 1, **characterized in that** each side wall (2, 3) has three mounts (8, 9, 10), and therefore three push-in planes are formed.

3. Apparatus according to Claim 1 or 2, **characterized in that** the depth of the pan (11) and position of the push-in planes are selected in dependence on the standard depth of the containers (15, 15', 15") such that the base of the pan (11), both in the position in which the latter has been suspended in the opening (6) and also in each push-in plane, is at the same distance from the base (17, 17', 17") of the container (15, 15', 15") which, in respect of the container depth, is assigned to this push-in plane.

4. Apparatus according to one of the preceding claims, **characterized by** the provision of at least one further pan (18), which is intended for accommodating water (19), serving to heat the foods, and has at least two mutually opposite, laterally projecting pan peripheries (21) and is dimensioned such that it can be suspended in the opening (6), engaging over the opening periphery (7) in the process.

5. Apparatus according to Claim 4, **characterized in that** the pan (18) has its pan peripheries (21) designed such that it can be inserted into the mounts (8, 9, 10) of at least one push-in plane.

6. Apparatus according to one of the preceding claims, **characterized by** the provision of a possibly pan-form carrying plate (23) which has at least two mutually opposite side peripheries (25), it being possible for these peripheries to be pushed into the mounts (8, 9, 10) of a push-in plane, and serves for accommodating at least one heating element (26), in particular a burner.

7. Apparatus according to one of the preceding claims, **characterized by** the provision, on the underside of the base of a pan (11, 18), of at least one mount (28) for at least one heating element (29, 31), in particular an electrically heatable heating plate (29) or a burner compartment (31).

8. Apparatus according to one of the preceding claims, **characterized in that** the pans (11, 18) or the carrying plate (23) are/is made of metal, in particular stainless steel, or plastics material.

9. Apparatus according to one of the preceding claims, **characterized in that** the basic structure (1) consists of wood, in particular coated wood, plastics material or metal, in particular stainless steel.

10. Arrangement for the display and simultaneous temperature control of foods, comprising an apparatus according to one of the preceding claims and also comprising at least one standard rectangular container (15, 15', 15") which serves for accommodating the foods.

11. Arrangement according to Claim 10, **characterized by** the provision of a plurality of containers (15, 15', 15") which are of different, albeit standard, sizes and of different lengths.

12. Arrangement according to Claim 11, **characterized by** the provision of containers (15, 15', 15") in three different sizes.

13. Arrangement according to Claim 12, **characterized in that** a container of the first size is dimensioned such that it alone fills the opening, **in that** a container of the second size is dimensioned such that two such containers can be suspended in the opening to fill the same, and **in that** a container of the third size is dimensioned such that three such containers can be suspended in the opening to fill the same.

14. Arrangement according to Claim 11, **characterized by** the provision of containers in two different sizes, wherein a container of the first size is dimensioned such that it alone fills the opening, and in that a container of the second size is a 2/4 container.

15. Arrangement according to one of Claims 10 to 14, **characterized in that** the containers (15, 15', 15") are made of porcelain, metal or plastics material.

## Revendications

1. Dispositif pour le conditionnement thermique d'aliments reçus dans des récipients rectangulaires en forme de coque de dimensions normées, **caractérisé en ce**
- **qu'**un corps (1) comprenant au moins deux parois latérales (2, 3) opposées l'une à l'autre ainsi qu'un recouvrement (5) reliant celles-ci du côté supérieur est prévu,
- **qu'**une ouverture rectangulaire (6) est prévue dans le recouvrement (5), sa dimension étant dimensionnée en fonction des dimensions normées des récipients (15, 15', 15") à accrocher dans l'ouverture (6), lesquels viennent en prise par le dessus du côté des bords avec l'ouverture (6) par des bords de récipients opposés l'un à l'autre, saillant latéralement (16, 16', 16"),
- **qu'**à chaque fois au moins deux logements en forme de rainure (8, 9, 10) opposés l'un à l'autre dans deux plans d'insertion espacés verticalement l'un de l'autre sont prévus dans les parois latérales (2, 3),
- et en ce qu'au moins un bac (11) servant au conditionnement thermique est prévu, lequel présente au moins deux bords de bac (13) saillant latéralement, opposés l'un à l'autre et lequel est dimensionné de telle sorte qu'il puisse être accroché d'une part dans l'ouverture (6) par engagement par le dessus avec le bord d'ouverture (7) par les bords du bac (13) et d'autre part qu'il puisse être inséré avec ses bords de bac (13) dans les logements respectifs opposés l'un à l'autre (8, 9, 10) dans les parois latérales (2, 3).

2. Dispositif selon la revendication 1, **caractérisé en ce que** chaque paroi latérale (2, 3) présente trois logements (8, 9, 10), de sorte que trois plans d'insertion soient formés.

3. Dispositif selon la revendication 1 ou 2, **caractérisé en ce que** la profondeur du bac (11) et la position des plans d'insertion sont choisies en fonction de la profondeur normée des récipients (15, 15', 15") de telle sorte que le fond du bac (11), à la fois dans la position accrochée dans l'ouverture (6) et dans chaque plan d'insertion, présente la même distance au fond (17, 17', 17") du récipient (15, 15', 15") associé à ce plan d'insertion en termes de profondeur de récipient.

4. Dispositif selon l'une quelconque des revendications précédentes, **caractérisé en ce qu'**au moins un bac supplémentaire (18) est prévu pour recevoir de l'eau (19) servant à réchauffer les aliments, lequel bac supplémentaire présente au moins deux bords de bac saillant latéralement, opposés l'un à l'autre (21), et est dimensionné de telle sorte qu'il puisse être accroché dans l'ouverture (6) par engagement par le dessus avec le bord de l'ouverture (7).

5. Dispositif selon la revendication 4, **caractérisé en ce que** le bac (18) est réalisé avec ses bords de bac (21) de telle sorte qu'il puisse être inséré dans les logements (8, 9, 10) d'au moins un plan d'insertion.

6. Dispositif selon l'une quelconque des revendications précédentes, **caractérisé en ce qu'**une plaque porteuse (23) configurée éventuellement en forme de bac est pourvue d'au moins deux bords latéraux opposés l'un à l'autre (25) qui peuvent être enfoncés dans les logements (8, 9, 10) d'un plan d'insertion, laquelle plaque porteuse sert à recevoir au moins un élément chauffant (26), en particulier un brûleur.

7. Dispositif selon l'une quelconque des revendications précédentes, **caractérisé en ce qu'**au niveau du côté inférieur du fond de bac d'un bac (11, 18) est prévu au moins un logement (28) pour au moins un élément chauffant (29, 31), en particulier une plaque chauffante (29) pouvant être chauffée électriquement ou un compartiment de brûleur (31).

8. Dispositif selon l'une quelconque des revendications précédentes, **caractérisé en ce que** les bacs (11, 18) ou la plaque porteuse (23) sont en métal, en particulier en acier inoxydable, ou en plastique.

9. Dispositif selon l'une quelconque des revendications précédentes, **caractérisé en ce que** le corps (1) se compose de bois, en particulier de bois enduit, de plastique ou de métal, en particulier d'acier inoxydable.

10. Système de présentation et de conditionnement thermique simultané d'aliments, comprenant un dispositif selon l'une quelconque des revendications précédentes, ainsi qu'au moins un récipient rectangulaire normé (15, 15', 15") qui sert à recevoir l'aliment.

11. Système selon la revendication 10, **caractérisé en ce que** plusieurs récipients (15, 15', 15'') de dimensions différentes mais normées sont prévus, lesquels sont de longueurs différentes.

12. Système selon la revendication 11, **caractérisé en ce que** les récipients (15, 15', 15") sont prévus en trois dimensions différentes.

13. Système selon la revendication 12, **caractérisé en ce qu'**un récipient de première dimension est dimensionné de telle sorte qu'il remplisse à lui seul l'ouverture, **en ce qu'**un récipient de deuxième dimension est dimensionné de telle sorte que deux de ces récipients puissent être accrochés dans l'ouverture en la remplissant, et **en ce qu'**un récipient de troisième dimension est dimensionné de telle sorte que trois de ces récipients puissent être accrochés dans l'ouverture en la remplissant.

14. Système selon la revendication 11, **caractérisé en ce que** les récipients sont prévus en deux dimensions différentes, un récipient de première dimension étant dimensionné de telle sorte qu'il remplisse l'ouverture à lui seul, et **en ce qu'**un récipient de deuxième dimension est un récipient 2/4.

15. Système selon l'une quelconque des revendications 10 à 14, **caractérisé en ce que** les récipients (15, 15', 15'') sont en porcelaine, en métal ou en plastique.
